# EUROPÄISCHE PATENTSCHRIFT

(11) **EP 2 404 358 B1**
(45) Veröffentlichungstag und Bekanntmachung des Hinweises auf die Patenterteilung: **24.09.2014**
(21) Anmeldenummer: 10706213.5
(22) Anmeldetag: 26.02.2010
(51) Int. Cl.: B60L 3/12, H02J 7/00, B60L 11/18

(54) **VERFAHREN UND VORRICHTUNG ZUM LADEN VON ELEKTROFAHRZEUGEN**
METHOD AND DEVICE FOR CHARGING ELECTRICAL VEHICLES
PROCÉDÉ ET DISPOSITIF DE CHARGEMENT DE VÉHICULES ÉLECTRIQUES

(30) Priorität: 03.03.2009 DE 102009011104; 08.04.2009 DE 102009016624
(43) Veröffentlichungstag der Anmeldung: 11.01.2012
(73) Patentinhaber: RWE AG, 45128 Essen (DE)
(72) Erfinder: GAUL, Armin, 59379 Selm (DE); DIEFENBACH, Ingo, 59425 Unna (DE); PEHLE, Benjamin, 44141 Dortmund (DE)
(74) Vertreter: Cohausz & Florack
(86) Internationale Anmeldenummer: PCT/EP2010/052448
(87) Internationale Veröffentlichungsnummer: WO 2010/100081

(56) Entgegenhaltungen:
- EP-A1- 2 141 043
- WO-A1-2008/132947
- DE-C1- 4 344 368
- GB-A- 2 446 694

## Beschreibung

Der Gegenstand betrifft ein Verfahren sowie eine Vorrichtung zum Laden von Elektrofahrzeugen, bei dem ein Elektrofahrzeug mit einer Ladestation zum Beziehen von elektrischer Energie verbunden wird.

Die Verbreitung elektrisch betriebener Fahrzeuge wird in naher Zukunft rapide zunehmen. Mit der Verbreitung von Elektrofahrzeugen, die mit einem Elektromotor betrieben werden, muss jedoch sichergestellt werden, dass diese in einfachster Weise mit Energie versorgt werden können. Hierzu muss eine funktionierende Infrastruktur zur Verfügung gestellt werden.

Insbesondere muss die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es notwendig, dass auch außerhalb des häuslichen Umfeldes ein Laden der Fahrzeuge möglich ist. Hierfür müssen in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch muss sichergestellt werden, dass der Kunde vor dem Beziehen elektrischer Energie Kenntnis über die zu erwartenden Kosten hat. Entsprechend des herkömmlichen Tankvorgangs muss der Kunde unmittelbar vor dem Aufladen der Batterie wissen, welche Kosten ihn erwarten. So muss dem Kunden beispielsweise der Preis für eine Kilowattstunde bekannt sein. Darüber hinaus ist das Aufladen von Batterien zeitintensiv. Derzeit ist es noch nicht möglich, eine Fahrzeugbatterie mit dem gleichen geringen Zeitaufwand aufzuladen, wie es beim Tanken der Fall ist. Daher ist auch die zu erwartende Ladezeit ein entscheidendes Kriterium für den Verbraucher. Er muss vor dem Beginn eines Ladevorgangs wissen, wie lange der Ladevorgang dauert.

Die GB 2 446 694 A offenbart ein bekanntes Verfahren zum Laden von Elektrofahrzeugen.

Aus diesem Grunde lag dem Gegenstand die Aufgabe zugrunde, ein Verfahren zum Laden von Elektrofahrzeugen zur Verfügung zu stellen, welches möglichst eine benutzerfreundliche Ladeschnittstelle zur Verfügung stellt.

Diese Aufgabe wird gegenständlich durch ein Verfahren zum Laden von Elektrofahrzeugen gelöst, wobei ein Elektrofahrzeug mit einer Ladestation zum Beziehen elektrischer Energie verbunden wird, fahrzeugseitig zumindest ein Ladezustand einer Batterie und eine gewünschte Ladedauer ermittelt wird, fahrzeugseitig die erforderliche Energie, um die Batterie vollständig aufzuladen, ermittelt wird, fahrzeugseitig zumindest Informationen über die erforderliche Energie und die Ladedauer an die Ladestation übermittelt wird und fahrzeugseitig von mittels der Ladestation mit Hilfe der erhaltenen Informationen aus einer Mehrzahl verschiedener Leistungsangebote zumindest ein den Informationen angepasstes ermitteltes Leistungsangebot empfangen wird.

Es ist erkannt worden, dass neben der Energiemenge, welche notwendig ist, um eine Batterie vollständig aufzuladen, auch die Ladedauer, die der Benutzer bereit ist zu warten, ein entscheidendes Kriterium für den Aufladevorgang ist. Aus diesem Grunde wird gegenständlich nicht nur die erforderliche Energie ermittelt, sondern auch die Ladedauer berücksichtigt, die vom Benutzer erwünscht wird. Anhand zumindest dieser beiden Parameter ist es möglich, mit Hilfe der Ladestation verschiedene Leistungsangebote aus einer Mehrzahl von Leistungsangeboten zu ermitteln.

Die Ladestation kann hierzu die vom Fahrzeug empfangenen Informationen an eine Zentral übermitteln. In der Zentrale kann dann mit diesen Informationen, beispielsweise zu der benötigten Leistung und der gewünschten Ladedauer, zumindest ein passenden Leistungsangebote ermitteln. Dieses zumindest eine Leistungsangebot kann dann von der Zentrale an die Ladestation übermittelt werden und von der Ladestation an das Fahrzeug übermittelt werden. In dem Fahrzeug kann dann das gewünschte Leistungsangebot aus den zur Verfügung stehenden Leistungsangeboten selektiert werden.

Leistungsangebote können sich beispielsweise durch unterschiedliche Stromstärken und unterschiedliche Spannungen sowie unterschiedliche Preise unterscheiden. Auch können Leistungsangebote verschiedene Erzeugerquellen beinhalten. Beispielsweise kann ein Leistungsangebot aus Strom aus regenerativen Energien beinhalten, wohingegen ein anderes Leistungsangebot Strom aus herkömmlichen Quellen beinhalten kann.

Beispielsweise ist es auch möglich, unterschiedliche Tarifmodelle zur Verfügung zu stellen. In einem ersten Tarifmodell ist es beispielsweise möglich, dass ein Fahrzeug mit einem maximalen Strom von 5 A und einer maximalen Spannung von 230 V geladen wird. In einem zweiten Tarifangebot ist es beispielsweise möglich, dass die maximale Stromstärke 10 A und die maximale Spannung 360 V beträgt. Auch ist es möglich, dass sich die Tarifmodelle lediglich in der maximal zur Verfügung stehenden Stromstärke unterscheiden. Darüber hinaus ist es möglich, dass ein erstes Tarifmodell die maximale Stromstärke über einen gesamten Zeitraum zur Verfügung stellt, wohingegen ein zweites Tarifmodell die maximale Stromstärke in einer Tagesganglinie anbietet. Das bedeutet, dass beispielsweise nachts eine höhere Stromstärke zur Verfügung gestellt wird, als tagsüber bzw. zu Spitzenlastzeiten. Abhängig von der Tagesganglinie stehen somit zu unterschiedlichen Zeiten unterschiedliche Stromstärken zur Verfügung. Der Benutzer eines Elektrofahrzeugs kann beispielsweise bei seinem Energieversorger unterschiedliche Tarifmodelle gebucht haben und aus diesen auswählen.

Da die unterschiedlichen Tarifmodelle unterschiedliche Kapazitäten innerhalb des Netzes des Energieversorgers erforderlich machen, können diese auch preislich sich voneinander unterscheiden. So ist es beispielsweise möglich, in einem günstigen Tarifmodell eine geringere Stromstärke zu Spitzenlastzeiten zu beziehen und eine höhere zu Ruhezeiten. Möchte ein Benutzer jedoch zu jeder Zeit eine minimale Ladezeit realisieren, so wäre ein Tarifmodell denkbar, welches zu jedem Zeitpunkt die maximale Stromstärke mit der maximalen Spannung zur Verfügung stellt, so dass die erforderliche Energie in der kürzest möglichen Zeit zur Verfügung gestellt wird.

Da fahrzeugseitig nicht nur die erforderliche Energie, die benötigt wird, eine Batterie vollständig aufzuladen, ermittelt wird, sondern auch die gewünschte Ladedauer, kann mit Hilfe der Ladestation, beispielsweise in einer Zentrale, ein entsprechendes Leistungsangebot ermittelt werden und an das Fahrzeug übermittelt werden. In dem Fahrzeug können die verschiedenen Leistungsangebote empfangen werden. Eine Kommunikation zwischen Fahrzeug und Ladestation kann beispielsweise mittels des TCP/IP Protokolls erfolgen.

Die Leistungsangebote können beispielsweise in einer kodierten Form übertragen werden. So ist es beispielsweise möglich, dass in dem Fahrzeug eine Empfangseinheit Parameter verschiedenartigster Leistungsangebote bereits gespeichert hält. In diesem Fall muss die Ladestation lediglich eine Referenz auf die ermittelten Leistungsangebote übermitteln und fahrzeugseitig werden aus dieser Referenz die Parameter des Leistungsangebots ermittelt. So können beispielsweise die Leistungsangebote A, B, C, D fahrzeugseitig gespeichert werden. Ermittelt die Ladestation, dass die Leistungsangebote A, D ausreichend sind, um die erforderliche Energie in der gewünschten Ladedauer zur Verfügung zu stellen, so kann beispielsweise lediglich A und D an das Fahrzeug übermittelt werden. In dem Fahrzeug wird dann anhand dieser Referenzen ermittelt, welche Stromstärke und welche Spannung die verschiedenen Leistungsangebote zur Verfügung stellen und welche Ladezeit zu erwarten ist, falls der Benutzer eines dieser Leistungsangebote wählt. Auch kann in einem Leistungsangebot der Energiepreis für dieses Leistungsangebot abgespeichert sein.

Auch ist es möglich, dass fahrzeugseitig Ladepräferenzen gespeichert werden. So kann ein Benutzer eines Fahrzeugs beispielsweise angeben, dass er zwei bestimmte Leistungsangebote bevorzugt. Ist unter den von der Ladestation zur Verfügung gestellten Leistungsangeboten eines der vom Benutzer bevorzugten Leistungsangeboten enthalten, so kann eine automatische Auswahl dieses Leistungsangebotes erfolgen.

Auch ist es möglich, dass neben der Information über die erforderliche Energie und der gewünschten Ladedauer auch eine Fahrzeugidentifikation übermittelt wird. Die Fahrzeugidentifikation erlaubt es, seitens der Ladestation die vom Benutzer, bzw. für das entsprechende Fahrzeug gebuchten Tarifmodelle zu identifizieren. In diesem Fall kann die Ladestation aus den vom Benutzer gebuchten Tarifmodellen die möglichen Leistungsangebote ermitteln. Auch ist es möglich, dass in dem Fahrzeug die vom Benutzer gebuchten Tarifmodelle abgespeichert sind und diese an die Ladestation übermittelt werden. Mit Hilfe dieser Information ist es auch möglich, dass die Ladestation die Leistungsangebote ermittelt.

Hierbei ist es möglich, dass eine Ladepräferenz für Nutzer in einer Zentrale gespeichert sind. Ist eine Nutzer- und/oder Fahrzeugidentifikation in der Zentrale bekannt, kann die Zentrale die Ladepräferenz des Nutzers ermitteln. Die Ladepräferenz kann beispielsweise an das Tarifmodel des Kunden geknüpft sein. So kann ein erster Kunde beispielsweise einen Tarifmodel gewählt haben, das ihn nur zum Bezug herkömmlich erzeugten Stroms berechtigt. Dagegen kann ein anderer Kunde einen Tarifmodel gewählt haben, das ihm Ökostrom garantiert. Diese Ladepräferenz kann bei der Auswahl des Leistungsangebotes berücksichtigt werden.

Beim Übermitteln einer Fahrzeugidentifikation ist es beispielsweise möglich, dass die Ladestation mittels eines Kommunikationsprotokolls mit einem zentralen Kontrollzentrum kommuniziert und anhand der Fahrzeugidentifikation die vom Benutzer gebuchten Tarifmodelle abfragt. Hierbei ist es möglich, dass die Ladestation bei der Anforderung eines Ladevorgangs zunächst beim Kontrollzentrum verfügbare Leistungsangebote abfragt. Abhängig von den in der Ladestation empfangenen, verfügbaren Leistungsangeboten kann die Ladestation dann die entsprechenden Leistungsangebote an das Fahrzeug übermitteln.

Gemäß eines vorteilhaften Ausführungsbeispiels wird vorgeschlagen, dass fahrzeugseitig eines der angepassten Leistungsangebote ausgewählt wird, und dass Informationen über das ausgewählte Leistungsangebot an die Ladestation übermittelt werden. Wenn in dem Fahrzeug die angepassten Leistungsangebote empfangen wurden, können diese dem Benutzer zur Auswahl gestellt werden. Dies ist beispielsweise durch Anzeigen auf einem Display in dem Fahrzeug möglich. Der Benutzer kann daraufhin das von ihm gewünschte Leistungsangebot auswählen. Das ausgewählte Leistungsangebot wird wiederum an die Ladestation kommuniziert. Hierbei ist es ebenfalls möglich, dass entweder Parameter des Leistungsangebotes oder eine Referenz auf ein Leistungsangebot an die Ladestation von dem Fahrzeug übermittelt wird. Auch diese Kommunikation kann mittels TCP/IP erfolgen.

Die Kommunikation zwischen Fahrzeug und Ladestation kann drahtlos, beispielsweise mittels Wlan, Bluetooth, Infrarot, GSM, UMTS oder dergleichen erfolgen. Auch ist eine drahtgebundene Kommunikation, beispielsweise über das Ladekabel selbst möglich.

Nachdem in dem Fahrzeug die angepassten Leistungsangebote empfangen wurden, kann fahrzeugseitig gemäß eines vorteilhaften Ausführungsbeispiels die verbleibende Ladezeit errechnet werden. Die ermittelte Ladezeit kann zusammen mit den Leistungsangeboten auch an dem Display dem Benutzer angezeigt werden. So kann der Benutzer beispielsweise selbst entscheiden, ob er einen längeren Ladevorgang in Kauf nimmt, wobei die bezogene Energie dann eventuell günstiger ist. Das Errechnen der Ladezeit kann beispielsweise ein Ermitteln einer ungefähren Ladedauer sein. So kann beispielsweise anhand von Messdaten eine Prognose für eine Ladezeit erstellt werden. Diese kann vom tatsächlichen Ende der Ladezeit abweichen, dass sich Messdaten, wie beispielsweise Außentemperatur, Batterietemperatur und dergleichen ändern können.

Nachdem ein Benutzer ein Leistungsangebot fahrzeugseitig ausgewählt hat, wird diese Information an die Ladestation übermittelt. Nachdem die Ladestation diese Information empfangen hat, kann mit Hilfe der Ladestation eine dem ausgewählten Leistungsangebot entsprechende Leistung auf dem Ladekabel zur Verfügung gestellt werden. Hierzu kann die Ladestation das entsprechende Leistungsangebot von der Zentrale abrufen. Der Ladevorgang kann somit nach dem Empfang des ausgewählten Leistungsangebotes in der Ladestation initiiert werden.

Gemäß eines vorteilhaften Ausführungsbeispiels wird auch vorgeschlagen, dass die Ladestation anhand des ausgewählten Leistungsangebots eine verbleibende Ladezeit berechnet. Hierdurch ist es beispielsweise möglich, dass in der Ladestation die verbleibende Ladezeit angezeigt wird. Auch ist eine Kommunikation der verbleibenden Ladezeit über das Ladekabel in das Fahrzeug möglich. Eine andere Kommunikation von Ladestation zu Fahrzeug ist ebenfalls möglich. Das Errechnen der Ladezeit kann beispielsweise ein Ermitteln einer ungefähren Ladedauer sein. So kann beispielsweise anhand von Messdaten eine Prognose für eine Ladezeit erstellt werden. Diese kann vom tatsächlichen Ende der Ladezeit abweichen.

Gemäß eines vorteilhaften Ausführungsbeispiels wird vorgeschlagen, dass fahrzeugseitig die angepassten Leistungsangebote angezeigt werden. Hierfür kann beispielsweise eine Flachbildanzeige, beispielsweise ein LCD-Display verwendet werden. Auch ist es möglich, dass die Leistungsangebote auf einem berührungssensitiven Bildschirm angezeigt werden.

Um dem Benutzer eine besonders einfache Auswahl der Leistungsangebote zu ermöglichen, werden diese über eine Benutzerschnittstelle auswählbar angezeigt.

Ein weiterer Gegenstand ist eine Vorrichtung zur Überwachung der Ladung von Elektrofahrzeugen mit Lademitteln zum elektrischen Verbinden eines Elektrofahrzeugs mit einer Ladestation zum Beziehen elektrischer Energie, Erfassungsmittel zum fahrzeugseitigen Ermitteln zumindest eines Ladezustands einer Batterie und einer gewünschten Ladedauer, Rechenmittel zum fahrzeugseitigen Ermitteln der erforderlichen Energie, um die Batterie vollständig aufzuladen, Kommunikationsmittel zum fahrzeugseitigen Übermitteln zumindest der Informationen über die erforderliche Energie und die Ladedauer an die Ladestation, wobei die Kommunikationsmittel zum fahrzeugseitigen Empfangen von mittels der Ladestation mit Hilfe der erhaltenen Informationen aus einer Mehrzahl verschiedener Leistungsangebote zumindest ein den Informationen angepassten ermittelten Leistungsangebotes gebildet sind.

Ein weiterer Gegenstand ist ein Verfahren zum Laden von Elektrofahrzeugen bei dem eine Ladestation mit einem Elektrofahrzeug zum Bereitstellen elektrischer Energie verbunden wird, bei dem ladestationsseitig Informationen zumindest zur fahrzeugseitig erforderlichen Energie, um eine Batterie vollständig aufzuladen, und zur Ladedauer empfangen werden, mit Hilfe der erhaltenen Informationen aus verschiedenen Leistungsangebote zumindest ein den Informationen angepasstes ermitteltes Leistungsangebot ausgewählt wird, und ladestationsseitig das ermittelte Leistungsangebot an das Fahrzeug übermittelt wird.

Hierbei kann die Ladestation von einer Zentrale anhand der empfangenen Informationen verfügbare Leistungsangebote abfragen. Auch kann die Zentral unter Verwendung einer Fahrzeugidentifikation Ladepräferenzen des Nutzers ermitteln und abhängig von den Ladepräferenzen als auch den Informationen zum Ladungszustand und der gewünschten Ladedauer zumindest ein Leistungsangebot aus einer Mehrzahl ermitteln.

Ein weiterer Gegenstand ist eine Vorrichtung zum Laden von Elektrofahrzeugen mit einer mit einem Elektrofahrzeug zum Bereitstellen elektrischer Energie verbindbaren Ladestation, einer in der Ladestation angeordneten Empfangseinrichtung zum Empfangen von Informationen zumindest zur fahrzeugseitig erforderlichen Energie, um eine Batterie vollständig aufzuladen, und zur Ladedauer, einer in der Ladestation angeordneten Kommunikationseinrichtung zur Kommunikation mit einer Zentrale und zum Übermitteln der vom Fahrzeug empfangenen Informationen an die Zentrale sowie zum Empfangen zumindest eines den empfangenen Informationen angepassten Leistungsangebot aus verschiedenen Leistungsangebote von der Zentrale, und einer in der Ladestation angeordneten Sendeeinrichtung zum Übermitteln des zumindest einen ermittelten Leistungsangebots an das Fahrzeug.

Nachfolgend wird der Gegenstand anhand einer Ausführungsbeispiele zeigenden Zeichnung näher erläutert. In der Zeichnung zeigen:
- Fig. 1: einen beispielhaften Aufbau einer Vorrichtung zur Überwachung der Ladung von Elektrofahrzeugen;
- Fig. 2: ein beispielhaftes Ablaufdiagramm.

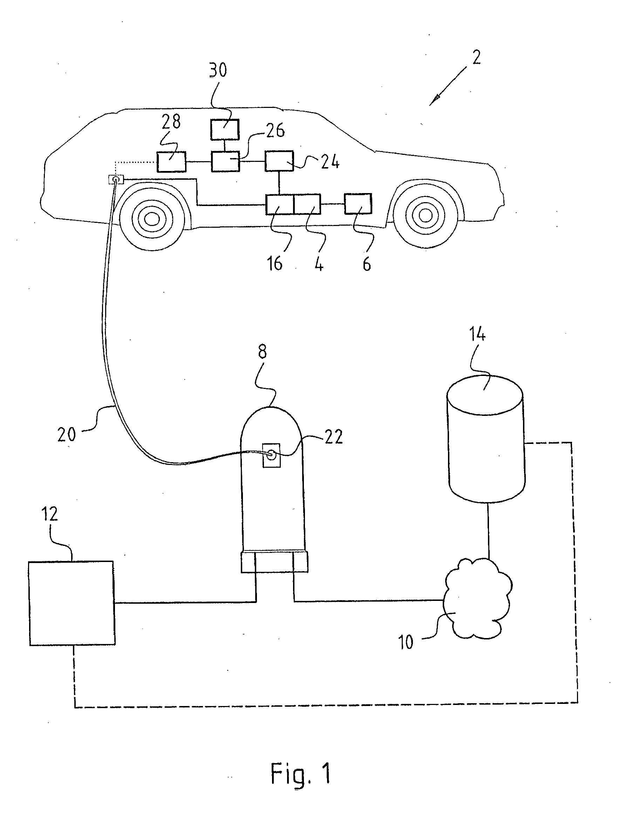

Fig. 1 zeigt ein Fahrzeug 2, welches eine Batterie 4 und einen Elektromotor 6 aufweist. Ferner zeigt Fig. 1 eine Ladestation 8, ein Kommunikationsnetz 10, ein Energieversorgungsnetz 12 sowie ein Kontrollcenter (Zentrale) 14.

In dem Fahrzeug 2 ist an der Batterie 4 ein Ladegerät 16 zur Ladungssteuerung der Batterie 4 angeordnet. Das Ladegerät 16 ist mit einer elektrischen Anschlussdose 18 verbunden. Die elektrische Anschlussdose 18 erlaubt es, das Fahrzeug 2 elektrisch über ein Ladekabel 20 mit einer Anschlussdose 22 der Ladestation 8 zu verbinden und somit elektrische Energie von dem Energieversorgungsnetz 12 zu beziehen.

Ferner ist in dem Fahrzeug 2 eine Messeinrichtung 24 vorgesehen, welche mit der Batterie 4 und dem Ladegerät 16 elektrisch verbunden ist. Die Messeinrichtung erlaubt es, den Ladungszustand (State Of Charge, SOC) der Batterie 4 zu erfassen. Die Messeinrichtung 24 ist mit einer zentralen Steuereinheit 26 verbunden. Ferner ist die zentrale Steuereinheit 26 mit einer Kommunikationseinheit 28 verbunden. Darüber hinaus ist die zentrale Steuereinheit 26 mit einem berührungsempfindlichen Display 30 verbunden.

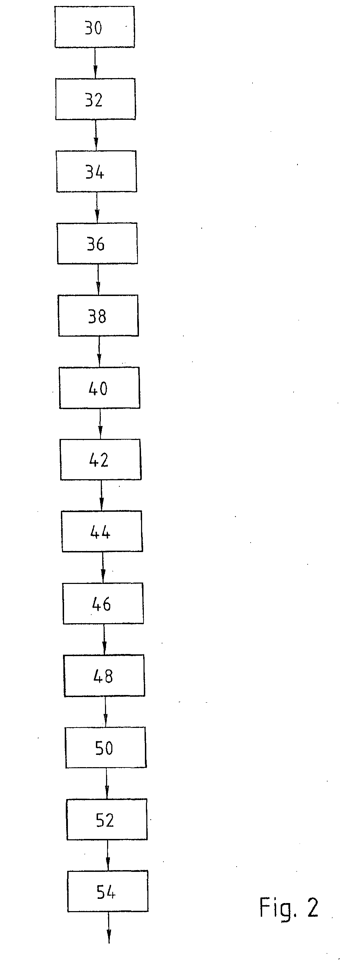

Der Vorgang zum Ermitteln eines gewünschten Leistungsangebots und zum Laden des Fahrzeugs wird nachfolgend in dem Ablaufdiagramm gemäß Fig. 2 dargestellt.

In einem ersten Schritt 30 wird das Fahrzeug 2 mittels des Ladekabels 20 elektrisch über die Anschlussdosen 18 und 22 mit der Ladestation 8 verbunden. Die elektrische Verbindung wird mittels des zentralen Steuergeräts 26 detektiert. In einem nächsten Schritt 32 generiert das zentrale Steuergerät 26 eine Benutzeridentifikation und/oder eine Fahrzeugidentifikation, welche über die Kommunikationseinheit 28 auf das Ladekabel 20 moduliert wird. In der Ladestation 8 werden die entsprechenden Identifikationsdaten empfangen und über das Kommunikationsnetz 10 an das Kontrollcenter 14 übermittelt. In dem Kontrollcenter 14 wird anhand der Identifikationsdaten ein Satz von Ladepräferenzen ermittelt, welche von dem Benutzer gebucht wurden. Diese Ladepräferenzen können unterschiedlichen Tarifmodellen entsprechen.

Anschließend wird in einem Schritt 36 in dem Fahrzeug 2 mittels der Messeinrichtung 24 der Ladezustand der Batterie ermittelt. Außerdem kann ein Benutzer über das berührungsempfindliche Display 30 eine gewünschte Ladedauer angeben. Hierbei kann der Benutzer beispielsweise angeben, wie lange der Ladevorgang andauern soll. Auch kann der Benutzer ein Intervall angeben, in dem die Ladung erfolgen soll. Dies kann beispielsweise darin bestehen, dass der Benutzer angibt, dass die Ladung zwischen 22 Uhr und 6 Uhr erfolgen soll.

Die zentrale Steuereinheit 26 empfängt im Schritt 38 sowohl den Ladungszustand der Batterie von der Messeinrichtung 24 als auch die gewünschte Ladedauer von dem berührungsempfindlichen Display 30. Mittels der gewünschten Ladedauer sowie des Ladezustands ermittelt die zentrale Steuereinheit 26 die benötigte Energie, um die Batterie innerhalb des gewünschten Ladezeitraums vollständig aufzuladen. Hierbei kann beispielsweise durch die zentrale Steuereinheit 26 die elektrische Leistung berechnet werden, welche notwendig ist, um mittels des Ladegeräts 16 die Batterie 4 vollständig innerhalb der gewünschten Ladedauer aufzuladen.

Die Informationen über die erforderliche Energie bzw. die erforderliche Leistung wird von der zentralen Steuereinheit an die Kommunikationseinheit in dem Schritt 40 übermittelt. Daraufhin verschlüsselt die Kommunikationseinheit 28 diese Informationen und moduliert diese auf das Ladekabel 20.

Im Schritt 42 empfängt die Ladestation 8 die Informationen über die erforderliche Energie und die Ladedauer von dem Fahrzeug 2. Die Ladestation, bzw. eine in der Ladestation verbaute Kommunikationseinheit übermittelt diese Daten an die Zentrale 14. In der Zentrale 14 wird dann anhand dieser Daten ein verfügbares Leistungsangebot ermittelt. Hierbei kann die Ladepräferenz des Kunden berücksichtigt werden. Auch kann eine Ladepräferenz eines Kunden unabhängig von einem Tarifmodel auswählbar sein. So kann der Kunde beispielsweise bereits bei der Ladungsanforderung eine Ladungspräferenz angeben, welche zusammen mit den Informationen über die erforderliche Energie und die Ladedauer an die Ladestation 8 und weiter an die Zentrale 14 übermittelt wird. Die Zentrale 14 ermittelt somit zumindest eine Leistungsangebot.

Das zumindest eine Leistungsangebot wird daraufhin in einem Schritt 34 von der Zentrale 14 über das Kommunikationsnetz an die Ladestation 8 übermittelt und in der Ladestation 8 temporär gespeichert.

Die ermittelten Leistungsangebote werden im Schritt 44 von der Ladestation 8 über das Ladekabel 20 an das Fahrzeug 2 übertragen.

Die Kommunikationseinheit 28 empfängt die ermittelten Leistungsangebote und übergibt die Informationen über die möglichen Leistungsangebote an die zentrale Steuereinheit 26. In der zentralen Steuereinheit 26 wird neben der den Leistungsangeboten jeweils entsprechenden Leistung und Energie auch ein Tarif, beispielsweise eine Angabe über die Kosten pro kWh angezeigt. Alle Informationen sind bevorzugt im dem Datensatz enthalten, der von der Ladestation von der Zentrale empfangen wird und an das Fahrzeug übermittelt wird. Somit ist es möglich, dass die Tarifparameter zusammen mit dem Leistungsangebot über das Ladekabel 20 von der Ladestation 8 an das Fahrzeug 2 übermittelt werden und somit in der zentralen Steuereinheit 26 zur Verfügung stehen.

Auch kann diese Information beispielsweise durch Überprüfen einer Look-up Tabelle geschehen, in der alle Leistungsangebote zugeordnet zu bestimmte Tarifparameter abgelegt sind.

Im Schritt 46 werden die verfügbaren Leistungsangebote dem Benutzer mittels der zentralen Steuereinheit 26 und dem berührungsempfindlichen Display 30 angezeigt. Der Benutzer wählt in einem Schritt 48 das gewünschte Leistungsangebot aus.

Im Schritt 50 übermittelt die Kommunikationseinheit 28 das gewählte Leistungsangebot über das Ladekabel 20 an die Ladestation 8. Diese Übermittlung kann beispielsweise eine Referenz auf das gewählte Leistungsangebot sein. In der Ladestation 8 wird im Schritt 52 das gewählte Leistungsangebot an das Kontrollcenter 14 über das Kommunikationsnetz 10 übermittelt. Das Kontrollcenter 14 veranlasst die Ladestation 8 über das Energieversorgungsnetz 12 die dem Leistungsangebot entsprechende Energie bzw. Leistung zu beziehen. Die zur Verfügung stehende Leistung, insbesondere die maximal zur Verfügung stehende Stromstärke, wird über das Ladekabel 20 dem Fahrzeug 2 zur Verfügung gestellt. Im Schritt 54 wird die zur Verfügung gestellte elektrische Leistung in dem Ladegerät 16 dazu verwendet, die Batterie 4 aufzuladen.

Während des Ladevorgangs kann durch die zentrale Steuereinheit 26 der Ladezustand mittels der Messeinrichtung 24 ermittelt werden und auf dem berührungsempfindlichen Display 30 angezeigt werden. Auch kann dem Benutzer mittels der zentralen Steuereinheit 26 und der Messeinrichtung 24 die (geschätzte) verbleibende Ladedauer angezeigt werden.

Mittels des beschriebenen Verfahrens und der beschriebenen Vorrichtung ist es möglich, dem Benutzer eine Auswahl unterschiedlicher Tarifangebote zur Verfügung zu stellen, um sein Elektrofahrzeug aufzuladen.

## Patentansprüche

1. Verfahren zum Laden von Elektrofahrzeugen durch
- Verbinden eines Elektrofahrzeugs (2) mit einer Ladestation (8) zum Beziehen elektrischer Energie,
- fahrzeugseitiges Ermitteln zumindest eines Ladezustands einer Batterie (4) und einer gewünschten Ladedauer,
- fahrzeugseitiges Ermitteln der erforderlichen Energie, um die Batterie (4) vollständig aufzuladen,
- fahrzeugseitiges Übermitteln zumindest der Informationen über die erforderlichen Energie und die Ladedauer an die Ladestation (8),
- fahrzeugseitiges Empfangen von mittels der Ladestation (8) mit Hilfe der erhaltenen Information aus einer Mehrzahl verschiedener Leistungsangebote verschiedenen den Informationen angepassten ermittelten Leistungsangeboten, **gekennzeichnet durch**
- fahrzeugseitiges Auswählen eines der angepassten Leistungsangebote, und
- fahrzeugseitiges Übermitteln der Informationen über das ausgewählte Leistungsangebot an die Ladestation (8).

2. Verfahren nach Anspruch 1, **dadurch gekennzeichnet, dass** die angepassten Leistungsangebote zumindest zwei Leistungsangebote enthalten, wobei die Stromstärken und/oder die Spannungen und/oder die Preise der zumindest zwei Leistungsangebote unterschiedlich sind.

3. Verfahren nach Anspruch 1, **dadurch gekennzeichnet, dass** fahrzeugseitig anhand des ausgewählten Leistungsangebots eine verbleibende Ladezeit errechnet wird.

4. Verfahren nach Anspruch 1, **dadurch gekennzeichnet, dass** die Ladestation (8) nach Empfang der Informationen über das ausgewählte Leistungsangebot eine entsprechende Leistung auf einem Ladekabel zur Verfügung stellt.

5. Verfahren nach Anspruch 1, **dadurch gekennzeichnet, dass** die Ladestation (8) anhand des ausgewählten Leistungsangebots eine verbleibende Ladezeit errechnet.

6. Verfahren nach Anspruch 1, **dadurch gekennzeichnet, dass** fahrzeugseitig die angepassten Leistungsangebote angezeigt werden.

7. Verfahren nach Anspruch 6, **dadurch gekennzeichnet, dass** fahrzeugseitig die angepassten Leistungsangebote über eine Benutzerschnittstelle (30) auswählbar sind.

8. Vorrichtung zum Laden von Elektrofahrzeugen mit
- Lademitteln (16) zum elektrischen Verbinden eines Elektrofahrzeugs (2) mit einer Ladestation (8) zum Beziehen elektrischer Energie,
- Erfassungsmittel (24) zum fahrzeugseitigen Ermitteln zumindest eines Ladezustands einer Batterie (4) und einer gewünschten Ladedauer,
- Rechenmittel (26) zum fahrzeugseitigen Ermitteln der erforderlichen Energie, um die Batterie vollständig aufzuladen,
- Kommunikationsmittel (28) zum fahrzeugseitigen Übermitteln zumindest der Informationen über die erforderliche Energie und die Ladedauer an die Ladestation (8),
- wobei die Kommunikationsmittel (28) zum fahrzeugseitigen Empfangen von mittels der Ladestation (8) mit Hilfe der erhaltenen Information aus einer Mehrzahl verschiedener Leistungsangebote verschiedenen den Informationen angepassten ermittelten Leistungsangeboten gebildet sind, **gekennzeichnet durch**
- Rechenmittel (26) zum fahrzeugseitigen Auswählen eines der angepassten Leistungsangebote, und
- Kommunikationsmittel (28) zum fahrzeugseitigen Übermitteln der Informationen über das ausgewählte Leistungsangebot an die Ladestation (8).

9. Verfahren zum Laden von Elektrofahrzeugen bei dem eine Ladestation mit einem Elektrofahrzeug zum Bereitstellen elektrischer Energie verbunden wird, bei dem
- ladestationsseitig Informationen zumindest zur fahrzeugseitig erforderlichen Energie, um eine Batterie vollständig aufzuladen, und zur Ladedauer empfangen werden,
- mit Hilfe der erhaltenen Informationen aus verschiedenen Leistungsangebote verschiedene den Informationen angepasste ermittelte Leistungsangebote ausgewählt werden, dadurch geknnzeichnet, dass
- ladestationsseitig die ermittelten Leistungsangebote an das Fahrzeug übermittelt werden, und
- ladestationsseitig Informationen zu einem fahrzeugseitig ausgewählten Leistungsangebot der ermittelten Leistungsangebote empfangen werden.

10. Vorrichtung zum Laden von Elektrofahrzeugen mit
- einer mit einem Elektrofahrzeug zum Bereitstellen elektrischer Energie verbindbaren Ladestation,
- einer in der Ladestation angeordneten Empfangseinrichtung zum Empfangen von Informationen zumindest zur fahrzeugseitig erforderlichen Energie, um eine Batterie vollständig aufzuladen, und zur Ladedauer,
- einer in der Ladestation angeordneten Kommunikationseinrichtung zur Kommunikation mit einer Zentrale und zum Übermitteln der vom Fahrzeug empfangenen Informationen an die Zentrale sowie zum Empfangen verschiedener den empfangenen Informationen angepassten Leistungsangeboten aus verschiedenen Leistungsangebote von der Zentrale, **gekennzeichnet durch**
- eine in der Ladestation angeordneten Sendeeinrichtung zum Übermitteln der verschiedenen ermittelten angepassten Leistungsangebote an das Fahrzeug, und
- einer in der Ladestation angeordneten Empfangseinrichtung zum Empfangen von Informationen zu einem fahrzeugseitig ausgewählten Leistungsangebot der ermittelten Leistungsangebote.

## Claims

1. A method for charging electric vehicles with
- connecting an electric vehicle (2) to a charging station (8) for receiving electric energy,
- determining at least a state of charge of a battery (4) and a desired duration of charge in the vehicle,
- determining the energy required for fully charging the battery (4) in the vehicle,
- transmitting at least information concerning the required energy and the duration of charge to the charging station (8) by the vehicle,
- receiving in the vehicle different power supply offer adapted to the information, which power supply offer has been determined from among a plurality of different power supply offers by means of the charging station (8) using the information received, **characterized by**
- selecting one of the adapted power supply offers in the vehicle and
- transmitting information concerning the selected power supply offer from the vehicle to the charging station (8).

2. The method of claim 1, **characterized in that** the adapted power supply offers contain at least two power supply offers, wherein the currents, and/or the voltages and/or the prices of the at least two power supply offers differ from each other.

3. The method according to claim 1, **characterized in that** based on the selected power supply offer a remaining charge time is calculated in the vehicle.

4. The method according to claim 1, **characterized in that** the charging station (8) provides a corresponding power on the charging cable after having received information concerning the selected power supply offer.

5. The method according to claim 1, **characterized in that** the charging station (8) calculates the remaining charge time based on the selected power supply offer.

6. The method according to claim 1, **characterized in that** the adapted power supply offers are indicated in the vehicle.

7. The method according to claim 6, **characterized in that** the adapted power supply offers are selectable in the vehicle through a user interface (30).

8. A device for charging electric vehicles, comprising
- charging means (16) for electrically connecting an electric vehicle (2) to a charging station (8) for receiving electric energy,
- detecting means (24) for detecting in the vehicle at least a state of charge of a battery (4) as well as a desired charge time,
- calculating means (26) for determining in the vehicle the required energy for fully charging the battery (4),
- communication means (28) for transmitting by the vehicle at least information concerning the required energy and the charge time to the charging station (8),
- wherein the communication means (28) are adapted for receiving in the vehicle different power supply offers adapted to the information, which power supply offer has been determined from among a plurality of different power supply offers by means of the charging station using the information received, **characterized by**
- calculation means (26) adapted for selecting one of the adapted power supply offers in the vehicle and,
- communication means (28) adapted for transmitting information concerning the selected power supply offer from the vehicle to the charging station (8).

9. A method for charging electric vehicles, wherein a charging station is connected to an electric vehicle for supplying electric energy,
- wherein information concerning at least the required energy for fully charging a battery in the vehicle and concerning the charge time are received in the charging station,
- based on the received information, different determined power supply offers adapted to the information are selected from among different power supply offers, **characterized in that**
- the determined power supply offers are transmitted to the vehicle by the charging station, and
- information relating to a vehicle side selected power supply offer out of the determined power supply offers are received in the charging station.

10. A device for charging electric vehicles, comprising
- a charging station which can be connected to an electric vehicle for supplying electric energy,
- a receiving device arranged in the charging station for receiving information concerning at least the energy required in the vehicle for fully charging a battery and the charge time,
- a communication device arranged in the charging station for communication with a central unit and for transmitting the information received from the vehicle to the central unit as well as for receiving from the central unit at least one power supply offer from among different power supply offers which is adapted to the information received **characterized by**
- a transmitting device arranged in the charging station for transmitting said at least one determined power supply offer to the vehicle, and
- a receiving unit arranged in the charging station adapted for receiving of information relating to a vehicle side selected power supply offer out of the determined power supply offers.

## Revendications

1. Procédé de chargement de véhicules électriques par
- la connexion d'un véhicule électrique (2) sur un poste de chargement (8) pour l'approvisionnement en énergie électrique,
- la détermination, côté véhicule, d'au moins un état de charge d'une batterie (4) et une durée de chargement désirée,
- la détermination, côté véhicule, de l'énergie nécessaire pour charger complètement la batterie (4),
- la transmission, du véhicule au poste de chargement (8), d'informations concernant au moins l'énergie nécessaire et la durée de chargement,
- la réception, côté véhicule, de différentes offres de puissance déterminées, adaptées aux informations déterminées, au moyen du poste de chargement (8), à l'aide d'informations reçues parmi plusieurs offres de puissance différentes
**caractérisé par**
- la sélection, côté véhicule, de l'une des offres de puissance adaptées, et
- la transmission au poste de chargement (8) des informations concernant l'offre de puissance sélectionnée.

2. Procédé selon la revendication 1,
**caractérisé en ce que** les offres de puissance adaptées comprennent au moins deux offres de puissance, sachant que les ampérages et / ou les tensions et / ou les prix des deux offres de puissance au moins prévues sont différents.

3. Procédé selon la revendication 1,
**caractérisé en ce que**, côté véhicule, un temps de chargement restant est calculé en fonction de l'offre de puissance sélectionnée.

4. Procédé selon la revendication 1,
**caractérisé en ce que** le poste de chargement (8), après réception des informations concernant l'offre de puissance sélectionnée, met à disposition, sur un câble de chargement, une puissance adéquate.

5. Procédé selon la revendication 1,
**caractérisé en ce que** le poste de chargement (8) calcule un temps de chargement restant en fonction de l'offre de puissance sélectionnée.

6. Procédé selon la revendication 1,
**caractérisé en ce que**, côté véhicule, les offres de puissance adaptées sont affichées.

7. Procédé selon la revendication 6,
**caractérisé en ce que**, côté véhicule, les offres de puissance adaptées peuvent être sélectionnées par l'intermédiaire d'une interface utilisateur (30).

8. Dispositif de chargement de véhicules électriques qui comprend
- des moyens de chargement (16) pour établir la connexion électrique entre un véhicule automobile électrique (2) et un poste de chargement (8) pour l'approvisionnement en énergie électrique,
- des moyens de détermination (24) pour déterminer, côté véhicule, au moins un état de charge d'une batterie (4) et une durée de chargement désirée,
- des moyens de calcul (26) pour déterminer, côté véhicule, l'énergie nécessaire au chargement complet de la batterie,
- des moyens de communication (28) pour transmettre du véhicule automobile au poste de chargement (8) les informations concernant l'énergie nécessaire et la durée de chargement,
- sachant que les moyens de communication (28) sont conçus pour la réception, côté véhicule, de différentes offres de puissance déterminées, adaptées aux informations déterminées, au moyen du poste de chargement (8), à l'aide d'informations reçues parmi plusieurs offres de puissance différentes
**caractérisé par**
- des moyens de calcul (26) pour la sélection, côté véhicule, de l'une des offres de puissance adaptées, et
- des moyens de communication (28) pour transmettre, du véhicule automobile au poste de chargement (8), les informations concernant l'offre de puissance sélectionnée.

9. Procédé de chargement de véhicules électriques, dans lequel un poste de chargement est relié à un véhicule électrique pour l'approvisionner en énergie électrique et dans lequel
- des informations, concernant au moins l'énergie nécessaire, côté véhicule, pour le chargement complet d'une batterie et la durée de chargement, sont reçues côté poste de chargement,
- différentes offres de puissance déterminées, adaptées aux informations, sont sélectionnées parmi plusieurs offres de puissance différentes, à l'aide des informations reçues,
**caractérisé en ce que**
- les offres de puissance déterminées sont transmises du poste de chargement au véhicule automobile, et
- des informations concernant une offre de puissance sélectionnée, côté véhicule, parmi les offres de puissance déterminées, sont reçues côté véhicule par le poste de chargement.

10. Dispositif de chargement de véhicules électriques comprenant :
- un poste de chargement qui peut être relié à un véhicule électrique pour l'approvisionnement en énergie électrique,
- un système de réception qui est agencé dans le poste de chargement pour recevoir des informations concernant au moins l'énergie nécessaire, côté véhicule, pour le chargement complet d'une batterie et la durée de chargement,
- un système de communication pour la communication avec une centrale et pour la transmission à la centrale des informations reçues par le véhicule, ainsi que pour la réception de différentes offres de puissance, adaptées aux informations reçues, parmi différentes offres de puissance de la centrale,
**caractérisé par**
- un système d'émission qui est installé dans le poste de chargement pour transmettre au véhicule automobile les différentes offres de puissance adaptées, déterminées, et
- un système de réception qui est installé dans le poste de chargement pour la réception d'informations concernant une offre de puissance sélectionnée, côté véhicule, parmi les offres de puissance déterminées.
